# EUROPÄISCHE PATENTSCHRIFT

(11) **EP 1 461 689 B1**
(45) Veröffentlichungstag und Bekanntmachung des Hinweises auf die Patenterteilung: **20.09.2006**
(21) Anmeldenummer: 02795079.9
(22) Anmeldetag: 28.11.2002
(51) Int. Cl.: G06F 9/38

(54) **VERFAHREN UND PRÜFEINRICHTUNG ZUM ENTDECKEN VON ADRESSIERUNGSFEHLERN IN STEUERGERÄTEN**
METHOD AND TEST DEVICE FOR DETECTING ADDRESSING ERRORS IN CONTROL DEVICES
PROCEDE ET DISPOSITIF D'ESSAI PERMETTANT DE DETECTER DES ERREURS D'ADRESSAGE DANS DES APPAREILS DE COMMANDE

(30) Priorität: 29.11.2001 DE 10158406
(43) Veröffentlichungstag der Anmeldung: 29.09.2004
(73) Patentinhaber: KNORR-BREMSE SYSTEME FÜR NUTZFAHRZEUGE GMBH, 80809 München (DE)
(72) Erfinder: MUSTAPHA, Adnan, 75433 Maulbronn (DE); WÖRNER, Dieter, 75031 Kleingartach (DE)
(74) Vertreter: Schönmann, Kurt
(86) Internationale Anmeldenummer: PCT/EP2002/013427
(87) Internationale Veröffentlichungsnummer: WO 2003/046717

(56) Entgegenhaltungen:
- GB-A- 2 125 578
- US-A- 4 700 304
- US-A- 5 258 986
- US-A- 5 713 643
- US-A- 6 087 929

## Beschreibung

Die vorliegende Erfindung bezieht sich auf ein Verfahren und eine Prüfeinrichtung zum Erfassen von Adressierungsfehlern in Steuergeräten gemäß dem Oberbegriff des Patentanspruches 1 bzw. 4.

Verfahren und Vorrichtung dieser Art sind aus der US 6,185,490 B1 bekannt. Dort ist ein Datenaufzeichnungsgerät zur Aufzeichnung von Unfalldaten eines Fahrzeuges unter Verwendung eines Mikroprozessors beschrieben, an den eine Vielzahl von Sensoren und ein addressierbarer Speicher angeschlossen sind. Ein Verfahren und eine Vorrichtung gemäß den Oberbegriffen der Ansprüchen 1 und 4 werden im US 5,713,643 A beschrieben. Bei jedem Einschalten oder Abschalten des Mikroprozessors dort oder in Abhängigkeit von anderen regelmäßig wiederkehrenden Ereignissen werden Selbsttests durchgeführt, in dem unter anderem zur Überprüfung von Speichern mit variablem Inhalt in alle Speicherzellen zeitlich nacheinander vorgegebene Testmuster eingeschrieben, wieder ausgelesen und mit dem vorgegebenen Testmuster verglichen werden. Dadurch können statische und dynamische Fehler beim Adressieren, Speichern und Lesen erkannt werden.

Die US 5,258,986 A beschreibt einen Selbsttest für RAM-Speicher. Auch dort werden verschiedene Testmuster in den Speicher eingeschrieben und wieder ausgelesen. Ein dort beschriebenes Testmuster hat eine Länge von 8 Bit, wobei jedes Testmuster nur eine einzige logische 1 hat, die zyklisch durch die einzelnen Bitstellen durchgeschoben wird. Nach 15 Schritten wiederholt sich das Muster zyklisch. Ein anderes Testmuster ist dazu gerade invertiert und es enthält eine einzige logische 0, die durch die einzelnen Bitstellen zyklisch durchgeschoben wird. Wiederum ein weiteres Testmuster enthält abwechselnd eine 0 und eine 1, wobei aufeinanderfolgende Adressen alternierend ein erstes oder zweites Testmuster enthalten. Schließlich ist ein weiteres Testmuster ein 8 Bit langes Wort, das nach dem bekannten BCD-Code (Binärcode) codiert ist. Das Testmuster entspricht dabei der binär codierten Adressnummer der entsprechenden Speicherzelle.

Die US 4,700,304 A beschreibt ein Steuergerät für ein ABS-Bremssystem mit einem Mikrocomputer, der neben seiner eigentlichen Bremssteuerfunktion auch Überwachungsaufgaben durchführt. So wird beispielsweise überprüft, ob Sensoren kurzgeschlossen oder unterbrochen sind. Weiter führt der Mikroprozessor einen Selbsttest durch, der bezüglich seines Arbeitsspeichers darin besteht, dass verschiedene Bitmuster in den Speicher eingeschrieben und von dort wieder ausgelesen werden. Im Fehlerfall wird der Mikrocomputer deaktiviert und ein Ausfallsicherheitskreis wird aktiviert.

Die GB 2,125,578 A beschreibt ein Selbstüberwachungssystem für Steuergeräte in Kraftfahrzeugen, bei dem verschiedene Eigentests durchgeführt werden. Die Prüfergebnisse werden in einem Speicher abgespeichert, der nicht gelöscht wird, wenn die Spannungsversorgung abgeschaltet wird. Auf eine von Hand aktivierte Anforderung werden die gespeicherten Prüfergebnisse angezeigt.

Die US 6,087,929 A entsprechend DE 196 21 941 A1 beschreibt eine Fehleranzeigevorrichtung für Kraftfahrzeuge, bei dem eine Anzeige erst nach Betriebsabschaltung des jeweiligen Systems bzw. beim Stillsetzen des Kraftfahrzeuges erfolgt. Sinn dieser Maßnahme ist es, den Fahrer während der Fahrt nicht durch Fehleranzeigen zu irritieren, sondern ihm erst am Ende der Fahrt, wenn das Fahrzeug stillsteht, die notwendigen Informationen zu liefern. Die jeweiligen Überprüfungen zur Auffindung von Fehlern werden während der Fahrt, d.h. bei aktiviertem Steuergerät durchgeführt und am Ende der Fahrt, bei deaktiviertem Steuergerät angezeigt.

Steuergeräte für Kraftfahrzeuge und insbesondere für Brems- und Fahrdynamiksysteme, wie z.B. ABS, ASR, ESP und ähnliches, werden aus Sicherheitsgründen redundant mit zwei Mikroprozessoren aufgebaut, die sich wechselseitig überwachen.

Aus Kostengründen werden aber auch Steuergeräte verwendet, die nur einen Mikroprozessor verwenden.

Ein wichtiger Vorgang der Überwachung besteht darin zu prüfen, ob bestimmte Speicherzellen beschreibbar und lesbar sind.

In der Praxis treten auch sog. Adressierungsfehler auf, d.h. bei einem Schreibvorgang auf eine bestimmte Speicherzelle wird ungewollt eine andere Zelle beschrieben. Hier kann es sowohl vorkommen, daß nur die falsche, d.h. nicht adressierte, Zelle beschrieben wird oder daß sowohl die adressierte als auch eine nicht adressierte Zelle beschrieben werden. Gerade der letzt genannte Fehler kann mit den herkömmlichen Prüfeinrichtungen nicht aufgedeckt werden.

Aufgabe der Erfindung ist es daher, Verfahren und Prüfeinrichtung der eingangs genannten Art dahingehend weiter zu entwickeln, daß auch jegliche Adressierungsfehler einwandfrei erkannt werden.

Diese Aufgabe wird durch die in den Patentansprüchen 1 bzw. 4 angegebenen Merkmale gelöst. Vorteilhafte Ausgestaltungen und Weiterbildungen der Erfindung sind den Unteransprüchen zu entnehmen.

Das Grundprinzip der Erfindung besteht darin, bei vom Benutzer für seine normale Funktion deaktiviertem Steuergerät vorgegebene Prüfdaten mit vorgegebenem Muster zeitlich nacheinander in alle adressierbaren Speicherzellen zu schreiben, anschließend wieder auszulesen und mit den Prüfdaten zu vergleichen, wobei in Abhängigkeit von dem Vergleich eine Fehlermeldung erzeugt wird, wobei in jeden Bereich aus adressierbaren Speicherzellen unterschiedliche Prüfdaten nach dem vorgegebenen Muster eingeschrieben werden und die Fehlermeldung gespeichert und erst beim Wiederaktivieren des Steuergerätes ausgegeben wird.

Nach einer Weiterbildung der Erfindung werden zeitlich aufeinanderfolgend unterschiedliche Muster von Prüfdaten eingeschrieben. Weiter ist es von Vorteil, wenn das vorgegebene Muster ein ausgewähltes Byte einer jeweiligen Adresse der Speicherzellen ist.

Im folgenden wird die Erfindung anhand eines Ausführungsbeispieles im Zusammenhang mit der Zeichnung ausführlicher erläutert.

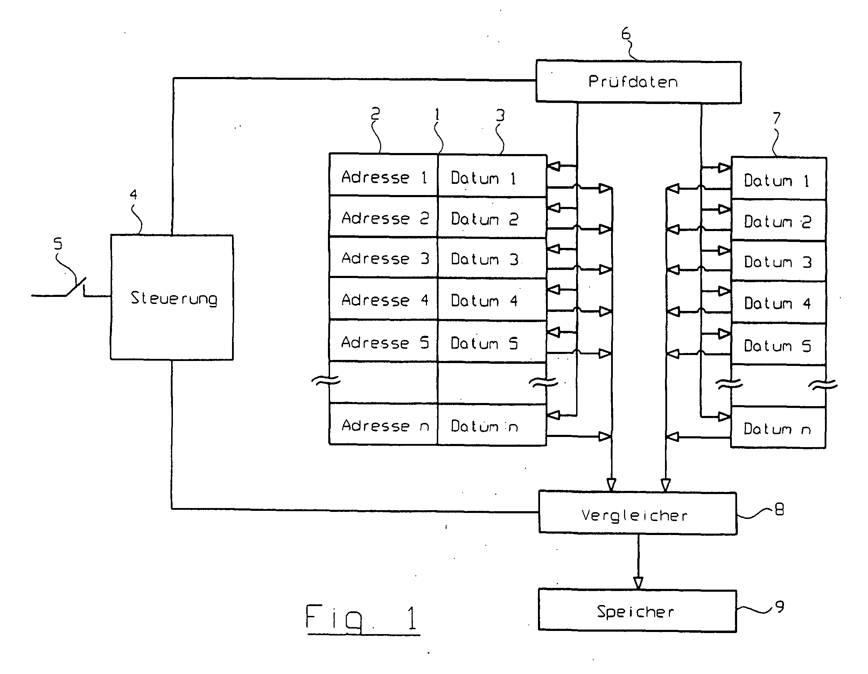

Die einzige Figur 1 zeigt eine Prinzipskizze der Prüfeinrichtung nach einem Ausführungsbeispiel der Erfindung.

Das Steuergerät hat einen adressierbaren Speicher 1 mit einer Vielzahl von individuell adressierbaren Speicherzellen 3, in die Daten (Datum 1 bis Datum m) einschreibbar und von dort aus lesbar sind. Die Adressen (Adresse 1 bis Adresse m) dieser Speicherzellen sind mit dem Bezugszeichen 2 gekennzeichnet. Eine Steuerung 4 erkennt, ob der normale Betrieb des Steuergerätes eines Fahrzeuges beendet ist beispielsweise dadurch, dass der Zündschalter 5 geöffnet wird. Die Steuerung 4 veranlaßt dann, dass ein Prüfdatengenerator 6 für alle Adressen (Adresse 1 bis Adresse n) jeweils vorbestimmte Muster von Daten in die Speicherzellen 3 einschreibt und zwar vorzugsweise nach einem vorgegebenen Muster. Diese Daten sind für einen späteren Vergleich ebenfalls verfügbar, beispielsweise in einem Zwischenspeicher 7. Nach diesem Schreibvorgang veranlaßt die Steuerung 4, dass die Daten ausgelesen und einem Vergleicher 8 zugeführt werden, wo sie mit den zwischengespeicherten Daten aus dem Zwischenspeicher 7 verglichen werden. Bei Nichtübereinstimmung der aus dem Speicher 1 ausgelesenen Daten mit den zwischengespeicherten Daten aus dem Zwischenspeicher 7 wird eine Fehlermeldung an einen Fehlerspeicher 9 ausgegeben und dort gespeichert. Beim Wiedereinschalten des zündschalters 5 wird der Speicher 9 ausgelesen und dem Fahrer in einem Display mit Warnlampen oder akustischen Anzeigevorrichtungen kenntlich gemacht.

In der Praxis können die Funktionen der Steuerung 4, des Prüfdatengenerators 6, des Zwischenspeichers 7 und des Vergleichers 8 von einem Mikrocontroller übernommen werden, wobei auch der Zwischenspeicher 7 nicht körperlich vorhanden sein muß, da die Prüfdaten nach einem vorgegebenen Muster vom Mikrocontroller erzeugt werden und daher jederzeit reproduzierbar sind.

Nach Abschalten des Steuergerätes, wenn also der Fahrer beispielsweise die Zündung ausmacht, und damit bekannt ist, dass das Steuergerät für seine normale Funktion, wie z.B. eine ABS-Regelung, nicht verwendet wird, wird ein umfangreicher und damit zeitintensiver Test durchgeführt, der während der normalen Steuerfunktionen nicht ausgeführt werden kann.

Nach dem Einschalten des Steuergerätes kann zusätzlich noch eine grobe Prüfung durchgeführt werden, bei der in die zu prüfenden Zellen vordefinierte Daten eingeschrieben werden und nach jedem Schreibvorgang einer Zelle der komplette Speicher ausgelesen wird und überprüft wird, ob diese Daten tatsächlich nur an der einen vorbestimmten Adresse existieren.

Mit der Erfindung können somit nicht nur die normalen Speicherfehler festgestellt werden, d.h. ob eine Zelle beschreibbar ist oder nicht, sondern auch Adressierungsfehler.

## Patentansprüche

1. Verfahren zum Erfassen von Adressierungsfehlern in Steuergeräten, wobei ein Steuergerät einen adressierbaren Speicher (1) mit mehreren individuell adressierbaren Speicherzellen (3) aufweist;
wobei das Verfahren folgende Schritte beinhaltet:
bei vom Benutzer für seine normale Funktion deaktiviertem Steuergerät werden vorgegebene Prüfdaten mit vorgegebenem Muster zeitlich nacheinander in alle adressierbaren Speicherzellen geschrieben, anschließend wieder ausgelesen und
mit den Prüfdaten verglichen, wobei in Abhängigkeit von dem Vergleich eine Fehlermeldung erzeugt wird;
**dadurch gekennzeichnet,**
**daß** in jeden Bereich aus adressierbaren Speicherzellen unterschiedliche Prüfdaten nach dem vorgegebenen Muster eingeschrieben werden und
**daß** die Fehlermeldung gespeichert und erst bei einem Wiederaktivieren des Steuergerätes ausgegeben wird.

2. Verfahren nach Anspruch 1, **dadurch gekennzeichnet, daß** zeitlich aufeinanderfolgend unterschiedliche Muster von Prüfdaten eingeschrieben werden.

3. Verfahren nach Anspruch 1 oder 2, **dadurch gekennzeichnet,**
**daß** das vorgegebene Muster ein ausgewähltes Byte einer jeweiligen Adresse der Speicherzellen ist.

4. Prüfeinrichtung zum Erfassen von Adressierungsfehlern in Steuergeräten, wobei ein Steuergerät einen adressierbaren Speicher (1) mit mehreren individuell adressierbaren Speicherzellen (3) aufweist;
wobei die Prüfeinrichtung folgendes beinhaltet:
einen Prüfdatengenerator (6), der in die einzelnen Speicherzellen (3) vorgegebene Prüfdaten mit vorgegebenem Muster zeitlich nacheinander einschreibt; ein Vergleicher (8), der die zuvor in die Speicherzellen (3) eingeschriebenen Prüfdaten ausliest und mit dem vorgegebenen Muster vergleicht, wobei in Abhängigkeit von dem Vergleich eine Fehlermeldung erzeugt wird;
und eine Steuerung (4), die bei vom Benutzer für seine normale Funktion deaktiviertem Steuergerät den Prüfdatengenerator (6) aktiviert;
**dadurch gekennzeichnet,**
**daß** in jedem Bereich aus adressierbaren Speicherzellen unterschiedliche Prüfdaten nach dem vorgegebenen Muster eingeschrieben werden und
**daß** dem Vergleicher (8) ein Fehlerspeicher (9) nachgeordnet ist, in welchem die Fehlermeldung gespeichert wird und erst bei einem Wiederaktivieren des Steuergerätes mittels eines Schalters (5) ausgegeben wird.

## Claims

1. A process for detecting addressing errors in control devices, a control device having an addressable memory (1) with several individually addressable memory cells (3);
said process containing the following steps:
when the control device is deactivated for its normal function by the user predetermined test data in a predetermined pattern is written in succession
to all addressable memory cells, then read out again and compared with the test data, an error message being generated dependent on the comparison;
**characterised in that**
different test data is written to each area of addressable memory cells in accordance with the predetermined pattern and
the error message is saved, not to be output until the control device is reactivated.

2. A process in accordance with claim 1,
**characterised in that**
different patterns of test data are written in succession.

3. A process in accordance with claim 1 or 2,
**characterised in that**
the predetermined pattern is a selected byte of a given address of the memory cells.

4. A test device for detecting addressing errors in control devices, a control device having an addressable memory (1) with several individually addressable memory cells (3);
said test device containing the following:
a test data generator (6) which writes predetermined test data in a predetermined pattern in succession to the individual memory cells (3); a comparator (8) which reads out the test data previously written to the memory cells (3) and compares it with the predetermined pattern, an error message being generated dependent on the comparison;
and a control system (4) which activates the test data generator (6) when the control device is deactivated for its normal function by the user;
**characterised in that**
different test data is written to each area of addressable memory cells in accordance with the predetermined pattern and
connected downstream of the comparator (8) is an error memory (9) in which the error message is saved, not to be output until the control device is reactivated by means of a switch.

## Revendications

1. Procédé de détection d'erreurs d'adressage dans des appareils de commande, dans lequel un appareil de commande a une mémoire (1) adressable ayant plusieurs cellules (3) de mémoire adressables individuellement;
le procédé ayant les stades suivants :
dans l'appareil de commande désactivé pour son fonctionnement normal par l'utilisateur, on écrit des données de contrôle prescrites ayant un modèle prescrit les unes après les autres dans le temps dans toutes les cellules de mémoires adressables, puis on les relit et on les compare aux données de contrôle, un message d'erreur étant produit en fonction de la comparaison;
**caractérisé en ce que**, on écrit des données de contrôle différentes selon le modèle prescrit dans chaque partie constituée de cellules de mémoires adressables et,
**en ce que** l'on mémorise le message d'erreur et l'on ne l'indique que lors d'une réactivation de l'appareil de commande.

2. Procédé selon la revendication 1, **caractérisé en ce qu'**on écrit des modèles différents de données de contrôle, ces modèles se succédant dans le temps.

3. Procédé selon la revendication 1 ou 2, **caractérisé en ce que**,
le modèle prescrit est un octet sélectionné d'une adresse respective des cellules de mémoires.

4. Dispositif de contrôle pour détecter des erreurs d'adresse des appareils de commande, un appareil de commande comprenant une mémoire (1) adressable ayant plusieurs cellules (3) de mémoire adressables individuellement;
dans lequel le dispositif de contrôle comporte ce qui suit:
un générateur (6) de données de contrôle, qui écrit les unes après les autres dans le temps suivant un modèle prescrit des données de contrôle prescrites dans les diverses cellules (3) de mémoire; un comparateur (8) qui lit les données de contrôle écrites auparavant dans les cellules (3) de mémoire et qui les compare au modèle prescrit en produisant un message d'erreur en fonction de la comparaison;
et une commande (4) qui active le générateur (6) de données de contrôle lorsque l'appareil de commande est désactivé par l'utilisateur pour son fonctionnement normal;
**caractérisé en ce qu'**il est monté en aval du comparateur (8) une mémoire (9) d'erreurs, dans laquelle le message d'erreur est mémorisé et celui-ci n'est émis au moyen d'un interrupteur (5) que lors d'une réactivation de l'appareil de commande.
